# EUROPEAN PATENT APPLICATION

(11) **EP 4 447 301 A1**
(43) Date of publication of application: **16.10.2024**
(21) Application number: 23386080.8
(22) Date of filing: 30.08.2023
(51) Int. Cl.: H02M 1/00, H02M 3/158, H02M 7/5387

(54) **RECONFIGURABLE ELECTRONIC DC TO AC POWER CONVERTER POWERED BY A PHOTOVOLTAIC ARRAY**

(30) Priority: 10.04.2023 GR 20230100307
(71) Applicant: TECHNICAL UNIVERSITY OF CRETE, 73100 Chania, Crete (GR); Koutroulis, Eftychios, Kounoupidiana, 73100 Chania Crete (GR); Orfanoudakis, Georgios, 71 500, Heraklion Crete (GR); Foteinopoulos, Georgios, 73100 Chania, Crete (GR)
(72) Inventor: Koutroulis, Eftychios, GR-73100 Chania (GR); Orfanoudakis, Georgios, GR-71500 Heraklion (GR); Foteinopoulos, Georgios, GR-73100 Chania (GR)
(74) Representative: Panagiotidou, Effimia

(57) **Abstract**

The invention refers to an electronic direct current to alternating current (DC/AC) power converter (44) of step-up/step-down type, with a photovoltaic (PV) array (3) as a direct current (DC) energy source and an alternating current (AC) output, whose electronic power circuit (1) is reconfigurable and interconnected with the electrical network (2). The electronic power circuit (1) of the electronic DC/AC converter (44) is automatically controlled by the control unit (36) so that its structure and switching frequency are rearranged in real time in order to optimally adapt to the constantly changing operating conditions imposed by the PV source (3), in order to increase the power conversion efficiency of the power circuit (1) and therefore the production of energy injected into the electrical grid (2). Also, the control unit (36) has the ability to locate the point of maximum power generation of the PV array (3), as well as to vary the gains of the current controllers of the DC/AC converter (44) according to optimization calculations performed by the local computer (43) with which it communicates so as to minimize the total harmonic distortion of the current that is injected into the electrical grid (2) under the respective input and output voltage and current operating conditions of the electronic DC/AC converter (44).

## Description

The installation of photovoltaic (PV) systems has increásed significantly over the past two decades, as they provide environmentally friendly energy production while enhancing energy security. The total global installed capacity of solar systems exceeded 1 TW in 2022. The main components of PV systems are the direct current to alternating current (DC/AC) converters that should process the generated PV energy with a high degree of power conversion efficiency and reliability.

However, PV systems operate with constantly changing solar radiation and ambient temperature that exhibit diurnal and seasonal variations, which also depend on the location of the installation. In addition, the output voltage of a PV array is decisively affected by its possible partial shading, which is particularly common in applications embedded in buildings. PV array reconfiguration techniques have been proposed by modifying the electrical connections between the individual PV panels that they comprise in order to smooth out the effect of partial shading, but their application increases the complexity and cost of the PV system due to the large number power switches and interconnection cables of the PV panels, which are required. Therefore, PV DC/AC power converters should exhibit a high degree of efficiency over a wide range of input voltage and current levels in order to optimally exploit the installed power capacity of the PV system.

The power conversion efficiency of a PV DC/AC converter depends on its topology and the functional characteristics of the active and passive components used in its construction. DC/AC PV inverters usually show maximum efficiency in a small operating power range. Various transformerless DC/AC PV converter topologies have been proposed to date (e.g. NPC, H5, HERIC, etc.) due to their high efficiency and low cost and weight characteristics. Among them, the step-up/step-down transformerless PV inverter topology has the advantage of being inherently adaptable to various PV array structures for interconnection with the electrical grid due to its ability to step-up and step-down appropriately the PV array voltage.

Regarding the design optimization of PV DC/AC electronic converters, related techniques have been proposed in the past, but their effectiveness depends on the respective power circuit topology. Also, these techniques are applied during the design stage of the PV DC/AC inverter, before its construction and installation in the field. The structure of the PV array connected to the PV DC/AC converter is defined by the PV system designer according to the installation requirements, after the industrial manufacturing process of the PV DC/AC converter. Thus, the effect of the final structure of the PV array (in terms of generated voltage and power levels) on the efficiency of the power circuit of the PV DC/AC converter is not taken into account by the above optimization techniques.

Reconfigurable topologies offer a solution to the above problem, where a process of modifying the power circuit structure and control software of a power electronic converter is carried out while it is operating, in order to better adapt to dynamically changing operating conditions and improve its performance. To date, electronic power converter reconfiguration techniques have been applied in various applications, such as PV systems, wind turbines, power supplies etc., in order to improve the voltage gain or fault-tolerance of the respective power converters. However, their use to improve the power generation efficiency of PV DC/AC inverters has not been investigated.

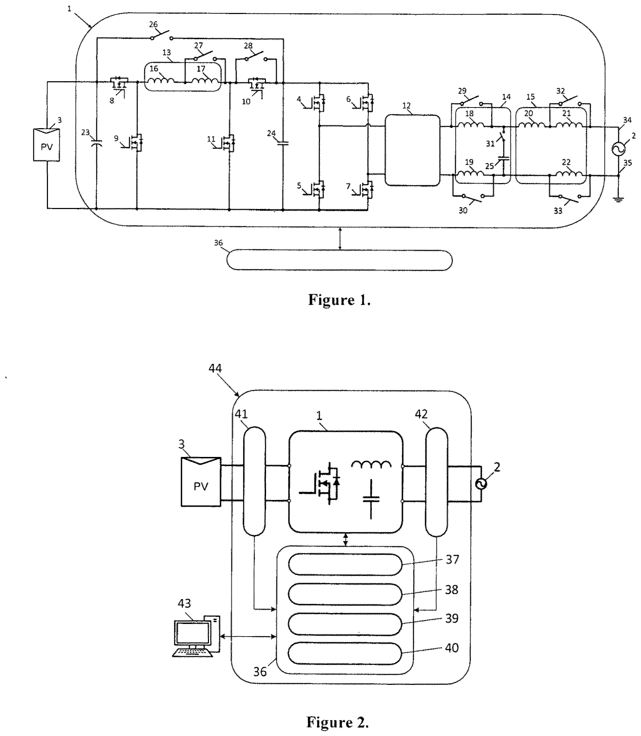

The internal arrangement of the reconfigurable DC/AC electronic power converter of the present invention is shown in Figure 1. The power circuit (1) of the DC/AC electronic power converter of the present invention is a step-up/step-down type and is connected to the electrical grid (2). It includes elements (4)-(11), which are controllable semiconductor switches (e.g. Metal Oxide Semiconductor Field-Effect Transistor MOSFETs can be used), as well as inductors (16)-(22) and the capacitors (23)-(25) that synthesize the filters of the power circuit. The switches (26)-(33) can be implemented using either electromechanical switches (relays), or bidirectional semiconductor power switches (e.g. transistors). The control unit (36) of the DC/AC converter (44) has the ability to automatically rearrange in real time the structure of the power circuit (1) so as to optimally adapt its structure to the constantly changing operating conditions imposed by PV source (3) in order to increase its efficiency and therefore the production of energy fed into the electrical grid (2).

The approach of the present invention for the restructuring of the power circuit (1) of the PV DC/AC converter (44) was based on the effect that changing certain structural elements and/or operating parameters of the converter can have on its performance in different operating conditions. The approach includes a) generally applicable and b) specialized interventions for the given topology. Generally applicable approaches include varying the number of parallel power semiconductor elements, the switching frequency, and the inductances and/or capacitances of the filters. The values of the above parameters are varied within permissible limits in order to maximize the power conversion efficiency of the DC/AC converter in any given operating condition, while at the same time respecting the necessary limits in relation to the maximum currents of the inductors, the distortion of the electrical grid current and the ground leakage current. Specialized interventions are additionally implemented by modifying the structure of the converter so that two or more topologies can be integrated into one. This expands the alternative modes of operation, offering the possibility of achieving even higher efficiency under given operating conditions. The above integration in the present invention was applied to the step-up/step-down transformerless PV DC/AC converter (44).

In order to achieve its integration with other PV inverter topologies, the power circuit topology of step-up/step-down type has been extended in the present invention by adding a controlled bypass circuit (12) of the full bridge (4)-(7) on the AC side and bypass branches on the DC side, to increase the power conversion efficiency of the power circuit. Also, bypass branches were added for inductors and capacitors of the filters (13)-(15) in order to achieve the change of inductance and capacitance values, respectively, that these filters contain.

The internal arrangement of the reconfigurable power electronic converter (1) of the present invention and its connection to the electrical grid (2) is shown in Figure 1. The converter includes a direct current (DC) input for connecting a PV array (3) and an alternating current (AC) output to the single-phase electrical grid (2).

The circuit of Figure 1 supports three different topologies (M1, M2 and M3, respectively), which are presented below.
- Topology M1: it is a full-bridge step-up/step-down topology, in step-up mode. The control unit sets switches (29) and (30) to the ON state (closed), while to change the values of its filters, the control unit (36) also sets switches (27), (32) and (33) to the ON state (closed). It is the only topology of the DC/AC converter of the present invention (1) that provides voltage step-up capability.
- Topology M2: is a full-bridge step-up/step-down topology, in step-down only mode. The control unit sets ON (closed) switches (29), (30) and (28), while to change the filter values, the control unit (36) also sets ON (closed) switches (27), (32) and (33). It bypasses the switching element (10) (which is continuously ON when no voltage step-up is required), via the switch (28), to avoid its conduction losses.
- Topology M3: it is a topology with a controlled bypass circuit (12) of the full bridge (4)-(7). This circuit includes controlled semiconductor switches and is controlled so that the current to the filter (14) passes through it and not through the full bridge (4)-(7) during the intervals when the output voltage of the bridge must be zero. For operation in this topology, the switches (26), (31) and (32) are set by the control unit (36) to the ON state (closed). Like the M2 topology, the M3 topology supports only step-down operation.

Topologies M1 - M3 were chosen since compared to other possible topologies they provide the advantage of achieving higher performance in some operating conditions. Among them, only the M1 topology provides the ability to increase the PV array voltage, while the M2 and M3 topologies can only be activated when the PV array voltage is high enough to be directly converted to AC for the interconnection of the power circuit of the DC/AC converter of the present invention (1) with the electrical grid (2).

The values of inductances and capacitances of the filters of the power circuit (1) of the DC/AC converter (44) of the present invention are changed as follows:
- When the switch (27) is closed (ON), the inductor (17) is short-circuited, i.e. bypassed. Otherwise, it is connected in series with the inductor (16), increasing the total value of the inductance.
- When switches (29) and (30), whose state is always common, are closed (ON), inductors (18) and (19) are bypassed. The bypass must not be applied when operating the inverter (1) in the form of the M3 topology.
- When the switch (31) is closed (ON), the capacitor (25) is connected to the rest of the circuit, while in the opposite case it is open-circuited, i.e. it is bypassed. The connection of the capacitor is required during the operation of the inverter (1) in the form of topology M3.
- When the switch (32) is closed (ON), the inductor (21) is bypassed. Otherwise, it is connected in series with the inductor (20), increasing the total value of the inductance in the conductor of the phase (34) of the electrical grid (2).
- When the switch (33) is closed (ON), the inductor (22) is bypassed. Otherwise, it is connected to the conductor of the neutral (35) of the electrical grid (2).

As shown in Figure 2, the DC/AC power electronic converter (44) of the present invention has a series of electronic measuring devices and controllers. The electronic device (41) measures the instantaneous voltage and instantaneous current of the PV array. Based on these measurements, the power produced by the PV array (3) is maximized by controlling the power electronic circuit (1) of the present invention by the Maximum Power Point Tracking (MPPT) subsystem (40) of the control unit (36), so that the power produced by the PV array is continuously maximized, even in partial-shading conditions. Also, the converter has an electronic device for measuring (42) the instantaneous voltage and instantaneous current at the point of connection to the electrical grid (2), on the basis of which the synchronization with the grid is performed by the current controllers (37), and is provided to it the reference current value determined by the MPPT subsystem (40) of the control unit (36) of the DC/AC converter (44) of the present invention, with the desired power factor.

The choice of the topology of the power circuit between M1, M2 and M3, the value of the switching frequency with which the power circuit (1) operates and the values of the inductances and capacitances of the filters (13)-(15) of the power circuit (1) of the DC/AC electronic converter (44) of the present invention, are determined by the dynamic reconfiguration subsystem of the control unit (36) of the DC/AC converter (44). The dynamic reconfiguration subsystem (39) operates using a look-up table which is stored in the control unit (36) of the DC/AC converter (44). This lookup table records the combination of power circuit topology (between M1, M2 and M3), switching frequency value and values of inductances and capacitances of filters (13)-(15) of power circuit (1) that achieve the maximum possible power conversion efficiency in each range of voltage and current values of the PV array and which simultaneously meet the functional limitations of the maximum allowable distortion of the electrical grid current and the maximum allowable value of the ground leakage current of the DC/AC converter (44) of the present invention.

Based on the lookup table, the dynamic reconfiguration of the power circuit (1) is continuously performed in real time by the dynamic reconfiguration subsystem (39) during operation of the DC/AC converter (44), as follows. The MPPT subsystem (40) of the control unit (36) varies the voltage and current produced by the PV array (3) until the power output of the PV array is maximized. When this operation is completed, the dynamic reconfiguration subsystem (39) first detects to which of the ranges of PV array voltage and current values contained within the lookup table belong the new PV array voltage and current values obtained after the completion of the operation of the MPPT subsystem (40) and then adjusts the electronic DC/AC power converter (44) to operate according to the combination of power circuit topology (between M1, M2 and M3), switching frequency and inductance values and capacitances of the filters (13)-(15) of the power circuit (1) to which these new voltage and current values of the PV array correspond in the lookup table.

To minimize the total harmonic distortion of the current at the point of connection to the electrical grid (2), the control unit (36) of the DC/AC electronic converter of the present invention controls the operation of the power circuit (1) based on the optimal values of analog and integral gains of the analog-integral (Proportional-Integral - PI) current controllers (37) of the DC/AC power electronic converter of the present invention, as follows:
- the amplitude and phase of the fundamental component of the output voltage and current, as well as low-order redundant components of the output voltage, namely the 5^{th}, 7^{th}, 11^{th} and 13^{th} harmonics, are initially calculated based on the output voltage and current measurements taken by the electronic measuring device (42)..
- these results are sent to the local computer (43), which calculates the gain values of the controllers that minimize the total harmonic distortion of the electric grid current under the current conditions of voltage and current of the DC input and AC output of the DC/AC electronic converter (44).
- the calculated optimal values from the local computer (43) are sent to the controller gain optimization unit (38) of the control unit (36) of the DC/AC converter (44), which applies them to the corresponding current controllers (37).

The reconfigurable photovoltaic DC/AC power converter of the present invention (44) was analyzed theoretically and its operation was confirmed through computer simulations and laboratory experiments. It has been shown that it can interconnect a PV array (3) with the electrical grid (2), achieving a higher efficiency, thus greater energy production, as well as current quality, over the entire range of its operating conditions, compared to non-reconfigurable PV DC/AC power converters.

## Claims

1. Direct current to alternating current (DC/AC) electronic power converter (44) of step-up/step-down type, with a direct current (DC) energy source from a photovoltaic (PV) array (3) and a single-phase alternating current (AC) output which is connected to the electrical grid (2), **characterized in that** its electronic power circuit (1) is automatically rearranged in real time by a control unit (36) in order to increase energy production which is fed into the electrical grid (2).

2. The electronic DC/AC power converter (44) according to Claim 1, **characterized in that** its power circuit includes switches controlled by a control unit (36) so that it can operate in either a step-up/step-down full-bridge topology in step-up/step-down mode (M1 topology), either in a step-up/step-down full-bridge topology in step-down-only mode (M2 topology), or in step-down-only topology (M3 topology) with a controlled full-bridge bypass circuit (12).

3. The electronic DC/AC power converter (44) according to Claims 1 and 2, **characterized in that** the power circuit of (1) includes bypass branches for inductors (17), (18), (19), (21), (22) and filter capacitors (25), which are activated through switches (27), (29), (30), (32), (33) and (31), respectively, to achieve the change of values inductance and capacity of the filters (13)-(15).

4. The electronic DC/AC power converter (44) according to Claims 1, 2 and 3, **characterized in that** the dynamic reconfiguration subsystem (39) of the control unit (36) uses a look-up table stored in the control unit (36) and contains the combination of power circuit topology (between M1, M2 and M3), switching frequency value and values of inductances and capacitances of filters (13)-(15) of power circuit (1) that achieves the maximum possible power conversion efficiency in each range of voltage and current values of the PV array (3) and simultaneously meets the operational constraints of maximum allowable grid current distortion and maximum allowable value of ground leakage current of the DC/AC converter (44) and within which the dynamic reconfiguration subsystem (39) first detects which of the PV array voltage and current value ranges it contains belong to the new PV array voltage and current values produced after the PV array power output maximization function is completed by the maximum power point detection subsystem (40) of the control unit (36) and then adjusts the electronic DC/AC power converter (44) to operate according to the power circuit topology combination (between M1, M2 and M3), switching frequency and values of inductances and capacitances of the filters (13)-(15) of the power circuit (1) to which these new voltage and current values of the PV array correspond in the look-up table.

5. The electronic DC/AC power converter (44) according to Claims 1, 2, 3 and 4 **characterized in that** the control unit (36) is capable of varying the gains of the current controllers of the DC/AC converter (44), to minimize the total harmonic distortion of the current fed into the electrical grid (2) by first calculating the amplitude and phase of the fundamental component of the output voltage and current, as well as at least the 5^{th} and 7^{th} harmonics of the output voltage based on measurements of the output voltage and current obtained by the electronic measuring device (42) and sending these results to a local computer (43), which calculates the gain values of the DC/AC converter controllers (44) which minimize the total harmonic distortion of the current injected into the electrical grid and then sends these optimal values to the controller gain optimization unit (38) of the control unit (36) of the DC/AC converter (44), which in turn applies them to the corresponding current controllers (37).

6. The electronic DC/AC power converter (44) according to Claims 1, 2, 3, 4 and 5, **characterized in that** the control unit (36) is capable of controlling the power circuit of the DC/AC converter (44), in order to continuously maximize the power output of the PV array (3) to which it is connected even in partially shaded conditions, using an electronic device (41) that measures the instantaneous voltage and instantaneous current produced by the PV array.
